# EUROPEAN PATENT APPLICATION

(11) **EP 3 176 133 A1**
(43) Date of publication of application: **07.06.2017**
(21) Application number: 15003422.1
(22) Date of filing: 01.12.2015
(51) Int. Cl.: C03C 23/00

(54) **A METHOD OF PROCESSING A GLASS**

(71) Applicant: Linde Aktiengesellschaft, 80331 München (DE)
(72) Inventor: MIETH, Rainer, 85435 Erding (DE); GÖRISCH, Matthias, 90768 Fürth (DE); SEYS, Michael, 80796 München (DE)
(74) Representative: Gellner, Bernd

(57) **Abstract**

The present invention relates to a method of processing a glass (180), wherein the glass (180) is constructed as a flat glass and/or wherein the glass (180) is designed to be exposed to high voltages, wherein a surface of the glass (180) is heated to a predetermined temperature by means of a flame (155) directly in contact with the surface such that a sodium content of the surface of the glass (180) is reduced.

## Description

The present invention relates to a method of processing a glass, wherein the glass is constructed as a flat glass and/or wherein the glass is designed to be exposed to high voltages, as well as to a correspondingly processed glass.

### Prior art

Glass corrosion can occur, when a glass comes in contact with water. When water remains on the surface of the glass, chemical reactions can occur that cause corrosion damage to the glass. Particularly, the water can react with sodium ions contained in the glass, forming sodium hydroxide. This can lead to an increase of the pH level of the glass, enabling other chemical reactions potentially causing increased corrosion damage to the glass.

Another negative effect on glasses involving sodium ions in the glass is the so called potential induced degradation (PID). Potential induced degradation can occur in glasses, which are exposed to high voltages, e.g. glasses used for photovoltaic modules. Photovoltaic modules usually comprise a multitude of photovoltaic cells covered by a protecting glass. In the course of the potential induced degradation sodium ions from the glass diffuse through the glass and accumulate on the surface of the photovoltaic cell or even diffuse into the photovoltaic cell itself. PID can occur when the photovoltaic module is exposed to a negative voltage to ground, thus forcing the sodium ions to diffuse from glass towards the photovoltaic cell. This PID effect can increase electrical resistance and can lower the efficiency of the photovoltaic module. Due to the PID, power and energy yield of the photovoltaic module can be reduced up to 30%, in worst cases theoretically even up to 100%.

It is thus desirable to provide a possibility of reducing glass corrosion and/or potential induced degradation (PID) of glasses.

### Disclosure of the invention

The present invention relates to a method of processing a glass as well as to a correspondingly processed glass with the features of the independent claims. Further advantages and embodiments of the invention will become apparent from the description and the appended figure.

The glass is especially constructed as a flat glass. Flat glass, often also referred to as sheet glass or plate glass, is a type of glass in a plane or essentially plane form and can for example be used for purposes in architecture (e.g. as windows or transparent walls), for automobiles (e.g. as windscreen, mirrors, etc.), or for entertainment industry (e.g. as screens for computer displays, television sets, or mobile phones).

Alternatively or additionally, the glass can be designed to be exposed to high voltages, i.e. the glass is going to be exposed to high voltages when mounted into a designated device and brought into operation. Particularly, the glass is used for a photovoltaic module, especially as a protective cover of photovoltaic cells.

According to the invention a surface of the glass is heated to a predetermined temperature by means of a flame directly in contact with the surface such that a sodium content of the surface of the glass is reduced. Particularly, a so called direct flame impingement (DFI) and/or a so called flame treatment or fire polishing of the surface of the glass is conducted. The surface of the glass is especially heated by means of the flame in order to remove sodium, sodium ions and/or a sodium compound from the surface of the glass. Thus, the sodium content of the surface can be deliberately reduced. Especially both surfaces of the glass (i.e. the top surface and the bottom surface) can be heated to the predetermined temperature.

By means of the flame directly touching the glass a "leaching" of sodium ions in the glass can be conducted. Particularly, water or water vapour is produced by the corresponding combustion, e.g. carbon dioxide and water can be produced when methane and oxygen are combusted. By means of the water and water vapour, respectively, sodium ions can be dissolved out of the glass thus reducing the sodium content of the glass.

With the present invention the problem of glass corrosion as well as potential induced degradation (PID) can be reduced. Not only can the negative effects of glass corrosion and PID be reduced but also can their respective origin be counteracted. By the method according to the invention sodium, be it in its atomic form or in ions or in compounds can be removed from the glass. Thus, this removed sodium is not available for reactions with water in the course of glass corrosion or for the PID. With less sodium available on the surface of the glass, PID and glass corrosion can be significantly reduced. Lifetime and efficiency of the glass can be increased.

In the course of the invention it was discovered that heating glass with a flame directly touching it has a positive effect on the glass. By heating the surface with the flame directly in contact with it, the amount of sodium reduction and thus the sodium content of the surface of the glass can be adjusted in a defined, desired way and to a desired level. Particularly, by heating specific areas of the surface to a specific temperature for a specific time interval, the sodium content can be adjusted in the desired way.

In a particularly advantageous embodiment, the glass is designed for use in a photovoltaic module. A photovoltaic module is especially made of several photovoltaic cells, wherein each photovoltaic cell is adapted to convert light into electrical energy. The photovoltaic cells are arranged for example on a panel of the photovoltaic module. The glass is adapted to be arranged on top of the photovoltaic module and works as a protective cover of the photovoltaic cells. The glass is thus provided to protect the components underneath, especially the photovoltaic cells. During operation of the photovoltaic module, the glass is exposed to high voltages. By the reduction of the sodium content, glass corrosion and/or potential induced degradation (PID) in photovoltaic modules can be reduced. With less sodium available on the surface of the glass, particularly PID can be significantly reduced during the lifetime of the photovoltaic module. A long-term efficiency of the photovoltaic module can thus be increased. The voltage level of the photovoltaic cells can be kept as efficient as possible. Power and energy yield of the photovoltaic module can be increased. Efficiency of the photovoltaic module can be increased and can be kept at a higher level during its life-time.

Advantageously, the surface of the glass is heated to the predetermined temperature by means of the flame in a way that a hydrolytic class of the glass is deliberately influenced. The hydrolytic class or hydrolytic resistance is especially to be understood as defined in the standard ISO 719: "The [hydrolytic] resistance is measured and expressed by the volume of acid required for titration of the alkali extracted from the unit mass of glass, and may also be expressed by the amount of sodium oxide equivalent to this volume of acid". According to ISO 719, the amount of Na₂O per gram glass grain leached out after 2g of the glass has been boiled in 50ml de-ionized water for 60 minutes at 98° C is a measure for the hydrolytic class. Thus, by deliberately reducing and desirably adjusting the sodium content of the surface of the glass, also the hydrolytic class of the glass can be adjusted in a desired way. Particularly, a hydrolytic class can be adjusted, such that the glass has a good resistance against glass corrosion or aging.

Particularly, the surface of the glass is heated by means of the flame in a way that the sodium content in a surface layer with a predetermined thickness is deliberately reduced. Especially, a convective heat transfer in the layer of the surface can be achieved. Particularly, diffusion of sodium in this layer towards the surface and evaporation can be achieved. The thickness of the layer can especially be up to 0.2 mm and more.

Advantageously, the surface of the glass is heated to an evaporation temperature of sodium by means of the flame as the predetermined temperature. Expediently, the predetermined temperature is below a melting temperature of the glass. Thus, a diffusion and evaporation of sodium, sodium ions and/or sodium compounds in the surface can be achieved, but the form of the glass is maintained. Particularly, the surface is heated up to a temperature in the range between 350°C and up to 1000°C, expediently in the range between 350°C and 750°C, expediently in the range between 400°C and 700°C.

Preferably, a predetermined or defined area of the surface of the glass is heated to the predetermined temperature by means of the flame. Thus, the sodium content in this very area can specifically and desirably be adjusted. Particularly, the entire surface of the glass is divided into a multitude of those areas and all these areas are consecutively or simultaneously heated in order to adjust the entire surface's sodium content with high precision.

Preferably, at least one burner is used to produce the flame and to heat the surface of the glass. Particularly, the burner or burners are arranged in a way that the flames touch the surface of the glass in the predetermined, defined area. By use of burners the predetermined temperature of the surface can easily be adjusted, especially by convective heat transfer. Thus, sodium diffusion to the surface and evaporation can be enhanced in a comparatively short time.

A convenient number of burners can be chosen in order to heat the surface to the predetermined temperature. The number of burners is especially dependent on the predetermined temperature, the glass chemistry, production speed, and/or the thickness of the layer of the glass, in which the sodium content is to be reduced.

The burners can be arranged in a single line or in several lines. Particularly, all burners of one particular line can be fuelled by a common fuel supply. A number of burners per line can also be arranged in segments, with each segment having its own fuel supply. The burner/burners can be arranged in a fixed position or can also be arranged moveably.

Preferably, the at least one burner is fuelled by a liquid fuel or a gaseous fuel, especially by natural gas or hydrogen, or mixtures of these fuels. The at least one burner is particularly fuelled by a mixture of air and oxygen. Preferably, the at least one burner is constructed as at least one oxy-fuel burner or oxy-fuel polishing burner.

Preferably, the at least one burner is fuelled by a gas mixture comprising at least one fluorinated gas, e.g. sulfur hexafluoride (SF₆), tetrafluoromethane (CF₄), and/or hexafluorethan (C₂F₆). The content of fluorinated gas or gases can make up to 15% of the gas mixture.

According to a preferred embodiment of the invention, the method is conducted in the course of a manufacturing process of the glass, preferably in the course of a rolled glass manufacturing process or a float glass manufacturing process. In the course of the float glass manufacturing process, the raw materials of the glass (e.g. soda lime glass, silica sand, calcium, oxide, soda, and/or magnesium) are mixed and introduced into a furnace, where they are melted, e.g. at temperatures around 1500°C. The liquid glass is allowed to flow smoothly and uniformly over a bath of molten tin. Since the molten glass is highly viscous, it does not mix with the molten tin, thus producing a flat contact surface of the glass. Thus, a continuous ribbon of molten glass with a specific width and thickness can be produced. In the course of the rolling glass manufacturing process, the molten glass is poured between rollers, e.g. metal rollers, to produce the ribbon with a predetermined thicknesses and patterned surface. In both cases, the ribbon is cooled down to room temperature, e.g. in a lehr. Inside the lehr or cooling lehr, stresses can be released out of the glass.

The heating of the surface to the predetermined temperature by means of the flame in order to reduce or adjust the sodium content can for example be conducted directly after the hot forming of the glass and/or inside the cooling lehr and/or after the glass has been cooled down to room temperature. In case of a float glass manufacturing process, the heating of the surface by means of the flame can preferably be performed when the glass flows over the tin bath.

The burner/burners can be arranged in a fixed position or can also be moved along with the ribbon, e.g. with the same velocity as the ribbon or also with a slightly higher or lower velocity. The burner/burners can be arranged vertically above and underneath of the ribbon in order to process both surfaces of the glass.

When the glass is used for a photovoltaic module, the glass can also be processed in the course of a manufacturing process of the photovoltaic module. After the sodium content of the glass surface is reduced in the desired way, the glass can be mounted on the photovoltaic cells to form the photovoltaic module.

The invention further relates to a glass processed according to a method according to the invention, preferably a glass designed for use in a photovoltaic module. Advantages and embodiments of this glass arise from the above description of the method according to the invention in an analogous manner.

It should be noted that the previously mentioned features and the features to be further described in the following are usable not only in the respectively indicated combination, but also in further combinations or taken alone, without departing from the scope of the present invention.

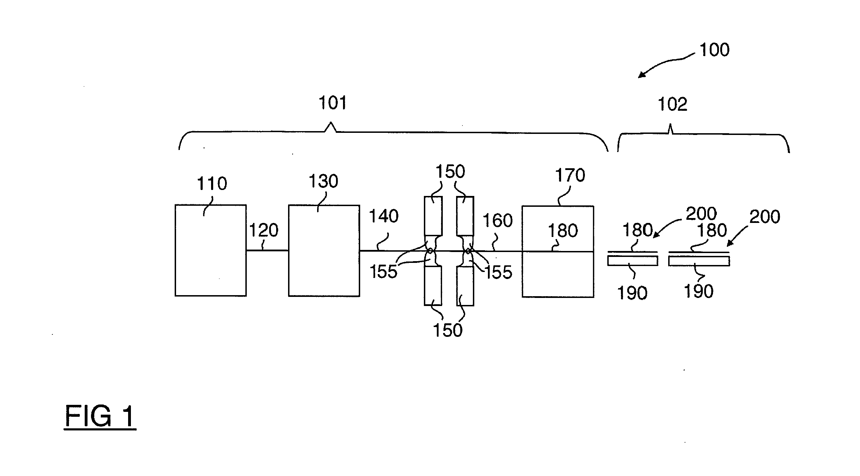

The present invention will now be described further, by way of example, with reference to the accompanying drawing, in which
- FIG. 1: schematically shows a manufacturing process of a photovoltaic module in the course of which a preferred embodiment of a method according to the invention is performed.

### Detailed description of the drawing

FIG. 1 schematically shows a manufacturing process 100 of a photovoltaic module 200. Each produced photovoltaic module 200 comprises several photovoltaic cells 190 and a glass 180 covering the photovoltaic cells 190.

In this particular example, the glass 180 is manufactured in the course of a float glass manufacturing process 101. For this purpose, raw materials of the glass, particularly SiO₂, Na₂O, and CaO are melted at temperatures around 1500°C inside a furnace 110.

The molten glass flows out of the furnace 110 in a continuous ribbon 120. The ribbon is cooled down to room temperature inside a cooling lehr 130.

The cooled down ribbon 140 is further processed according to a preferred embodiment of the method according to the invention, in the course of which a sodium content of the surface of the glass is deliberately reduced and adjusted to a desired level.

For this purpose, burners 150 fuelled by an oxygen-air-mixture are provided. For example, two burners can be arranged vertically above the ribbon 140 and two burners can be arranged vertically underneath the ribbon 140.

By means of the burners 150, a flame treatment or direct flame impingement (DFI) of the glass is conducted. The flames 155 of the burners 150 directly touch the surface of the ribbon 140 in a predetermined, defined area. Thus, the predetermined area of the ribbon 140 is heated to the evaporation temperature of sodium by means of the flames 155 as a predetermined temperature.

Thus, both the top surface and the bottom surface of the ribbon 140 are heated by the flames 155 in a way that the sodium content of a layer (of e.g. 0.2 mm) of the corresponding surface is deliberately reduced to the desired level. By the means of convective heat transfer, sodium in the corresponding layers diffuses towards the corresponding top surface and is evaporated. Moreover, a hydrolytic class of the glass can deliberately be adjusted by reducing and adjusting the sodium content.

The processed ribbon 160 with the desired sodium content is then - if necessary after further cooling - cut into pieces of glass 180 by a glass cutter 170.

The pieces of glass 180 and the photovoltaic cells 190 are combined to the photovoltaic modules 200 in the course of a mounting process 102.

By means of the processed glass 180 with the reduced and adjusted sodium content, potential induced degradation (PID) in the photovoltaic module 200 can be reduced, and long-term efficiency, power and energy yield of the photovoltaic module 200 can be increased.

### Reference list

- 100: manufacturing process of a photovoltaic module
- 101: float manufacturing process
- 102: mounting process
- 110: furnace
- 120: ribbon
- 130: cooling lehr
- 140: cooled down ribbon
- 150: burners
- 155: flames of the burners
- 160: processed ribbon
- 170: glass cutter
- 180: glass
- 190: photovoltaic cells
- 200: photovoltaic module

## Claims

1. A method of processing a glass (180), wherein the glass (180) is constructed as a flat glass and/or wherein the glass (180) is designed to be exposed to high voltages, **characterised in that** a surface of the glass (180) is heated to a predetermined temperature by means of a flame (155) directly in contact with the surface such that a sodium content of the surface of the glass (180) is reduced.

2. The method according to claim 1, wherein the surface of the glass (180) is heated to the predetermined temperature by means of the flame (155) such that a hydrolytic class of the glass (180) is adjusted.

3. The method according to claim 1 or 2, wherein the surface of the glass (180) is heated by means of the flame (155) such that the sodium content in a surface layer of a predetermined thickness is reduced.

4. The method according to any one of the previous claims, wherein the surface of the glass (180) is heated by means of the flame (155) to an evaporation temperature of sodium as the predetermined temperature.

5. The method according to any one of the previous claims, wherein a predetermined area of the surface of the glass (180) is heated to the predetermined temperature.

6. The method according to any one of the previous claims, wherein at least one burner (150) is used to produce the flame (155) and to heat the surface of the glass (180).

7. The method according to claim 6, wherein a flame treatment and/or a fire polishing is performed.

8. The method according to claim 6 or 7, wherein the at least one burner (150) is fuelled by a liquid fuel or a gaseous fuel, especially by natural gas or hydrogen, or fuel mixtures.

9. The method according to any one of the claims 6 to 8, wherein the at least one burner (150) is fuelled by a gas mixture comprising at least one fluorinated gas.

10. The method according to any one of the previous claims, wherein the glass (180) is designed for use in a photovoltaic module (200).

11. A glass (180) processed according to a method of any one of the previous claims, wherein the glass (180) is constructed as a flat glass and/or wherein the glass (180) is designed to be exposed to high voltages.

12. The glass (180) according to claim 11, designed for use in a photovoltaic module (200).
